# EUROPÄISCHE PATENTSCHRIFT

(11) **EP 2 133 217 B1**
(45) Veröffentlichungstag und Bekanntmachung des Hinweises auf die Patenterteilung: **19.01.2011**
(21) Anmeldenummer: 09158571.1
(22) Anmeldetag: 23.04.2009
(51) Int. Cl.: B60C 11/12

(54) **Fahrzeugluftreifen**
Pneumatic tyres for a vehicle
Pneus de véhicule

(30) Priorität: 14.06.2008 DE 102008028461
(43) Veröffentlichungstag der Anmeldung: 16.12.2009
(73) Patentinhaber: Continental Reifen Deutschland GmbH, 30165 Hannover (DE)
(72) Erfinder: Maggiora, Alberto, 30161 Hannover (DE); Bolz, Gerrit, Dr., 29308 Winsen (DE)
(74) Vertreter: Finger, Karsten

(56) Entgegenhaltungen:
- EP-A- 0 952 011
- EP-A- 1 223 054
- EP-A- 1 669 218
- EP-A- 1 769 946
- WO-A-94/21478
- DE-A1- 10 214 913
- US-A1- 2006 016 537

## Beschreibung

Die Erfindung betrifft einen Fahrzeugreifen - insbesondere einen Fahrzeugluftreifen - mit einem Laufstreifen, welcher sich aus Profilelementen, wie Profilblöcken oder Profilrippen, zusammensetzt, von denen wenigstens einige jeweils mit mindestens einem Feineinschnitt versehen sind, welcher sich mit einer ersten Haupterstreckungsrichtung in der Reifenperipherie und mit einer zweiten Haupterstreckungsrichtung von der Reifenperipherie mit einer radialen Richtungskomponente nach radial innen erstreckt und welcher Einschnittswände mit korrespondierender Form aufweist, die längs eines radialen Erstreckungsabschnittes t₁ ausgehend von der Reifenperipherie nach radial innen in allen parallelen Schnittebenen zur Reifenperipherie mit einer längs der ersten Hauptersteckungsrichtung ausgebildeten Wellenlinien- oder Zickzackform mit einer ersten Nulllinie und von der ersten Nulllinie gemessener Amplitude (s) ausgebildet ist.

Herkömmliche Winterreifen sind mit einem Laufstreifenprofil mit Feineinschnitten in Profilblockelementen ausgebildet, die sich in der Reifenperipherie geradlinig, wellen- oder zickzackförmig erstrecken. Diesen Verlauf der Geradlinigkeit, Zickzack- oder Wellenlinienförmigkeit besitzen die herkömmlichen Feineinschnitte in allen Querschnittsebenen parallel zur Reifenperipherie, d.h. senkrecht zur der radialen Erstreckung des Einschnittes. In Schnittebenen senkrecht zur Drehachse des Reifens erstrecken sich diese Feineinschnitte üblicherweise in radialer Richtung. Die Feineinschnitte bewirken dabei zusätzlichen Griff auf Schnee, wobei gerade die zickzackförmigen oder wellenlinienförmigen Verläufe eine weitere Verbesserung des Griffes durch verlängerte Griffkanten und Kantenverläufe mit Griffwirkung sowohl in Umfangsrichtung als auch in axialer Richtung des Reifens ermöglichen. Diese Feineinschnitte bewirken jedoch eine Aufweichung des jeweiligen Profilblockelementes. Besonders bei Neureifen wird das Profilblockelement besonders biegeweich, wodurch die Bremseigenschaften, insbesondere die Trockenbremseigenschaften, beim Neureifen beeinträchtigt werden können. Über die Lebensdauer des Reifens nimmt aufgrund des Abriebes des Profilblockelementes die der Biegeweichheit des Profilblockelementes ab, so dass mit zunehmender Laufleistung des Reifens die Steifigkeit des Profilblockelementes erhöht wird. Die Trockenbremseigenschaften werden hierdurch über die Lebensdauer verbessert.

Aus der US 2006/0016537 A1 ist ein Fahrzeugluftreifen bekannt, bei dem Feineinschnitte von Profilblockelementen in der Reifenperipherie mit in axialer Richtung des Reifens ausgerichtetem geradlinigen Verlauf und längs ihrer Erstreckung in radialer Richtung nach radial innen in jeweils parallelen Schnittebenen zur Reifenperipherie, d.h. in Schnittebenen senkrecht zur Radialen, mit zickzackförmigem Verlauf mit in den einzelnen nach radial innen hintereinander angeordneten Schnittebenen mit zunehmender Amplitude ausgebildet sind. Hierdurch kann erreicht werden, dass das Profilblockelement über seine Lebensdauer mit zunehmender zusätzlicher Griffkantenlänge ausgebildet wird, wodurch durch die zunehmende Zickzackform zusätzlicher Griff in Seitenrichtung bewirkt wird. Das Profilblockelement kann im Neuzustand des Reifens, in dem das Profilblockelement relativ biegeweich ist und aufgrund der Verbiegung bereits zusätzlichen Griff auf Schnee durch die Profilblockkanten aber auch durch den Feineinschnitt ermöglicht, mit der geringen wirkenden zusätzlichen Kantenlänge betrieben werden. Mit zunehmender Lebensdauer, bei dem aufgrund des erfolgten Abriebes des Profilelementes das Profilelement versteift, wird durch zunehmende Kantenlänge des Feineinschnitts hierdurch zusätzlicher Griff auf Schnee ermöglicht. Dennoch ist auch bei einem derartigen Profil das Profilblockelement im Neuzustand relativ biegeweich ausgestaltet, was zu Lasten der Bremseigenschaften - insbesondere auf trockener Straßenoberfläche - geht. Erst über die Lebensdauer mit zunehmender Versteifung des Profilblockelementes wird die Bremseigenschaft - insbesondere auf trockener Straßenoberfläche - verbessert.

Der Erfindung liegt die Aufgabe zugrunde, mit einfachen Mitteln einen Fahrzeugluftreifen zu schaffen, bei dem über die Lebensdauer hinweg guter Längs- und Seitengriffeigenschaften auf Nässe, Schnee und Eis bei ebenfalls gleichbleibend guten Bremseigenschaften auf Nässe, Schnee, Eis und trockener Straße einhergehen.

Erfindungsgemäß gelöst wird die Aufgabe durch die Ausbildung eines Fahrzeugreifens - insbesondere Fahrzeugluftreifens - mit einem Laufstreifen, welcher sich aus Profilelementen, wie Profilblöcken oder Profilrippen, zusammensetzt, von denen wenigstens einige jeweils mit mindestens einem Feineinschnitt versehen sind, welcher sich mit einer ersten Haupterstreckungsrichtung in der Reifenperipherie und mit einer zweiten Haupterstreckungsrichtung von der Reifenperipherie mit einer radialen Richtungskomponente nach radial innen erstreckt und welcher Einschnittswände mit korrespondierender Form aufweist, die längs eines radialen Erstreckungsabschnittes t₁ ausgehend von der Reifenperipherie nach radial innen in allen parallelen Schnittebenen zur Reifenperipherie mit einer längs der ersten Hauptersteckungsrichtung ausgebildeten Wellenlinien- oder Zickzackform mit einer ersten Nulllinie und von der ersten Nulllinie gemessener Amplitude (s) ausgebildet ist, gemäß den Merkmalen von Anspruch 1, wobei die Amplitude (s) der Wellenlinien- oder Zickzackform in den Schnittebenen ausgehend von einem Maß (sₘᵢₙ) einer minimalen Amplitude in der Reifenperipherie nach radial innen hin bis zu einem Maß (sₘₐₓ) einer maximalen Amplitude stetig zunimmt, wobei die ersten Nulllinien dieser parallelen Schnittebenen zur Reifenperipherie ihrerseits in allen Schnittebenen senkrecht zur ersten Haupterstreckungsrichtung des Feineinschnitts längs des radialen Erstreckungsabschnittes t₁ ausgehend von der Reifenperipherie nach radial innen ebenfalls einen wellenlinien- oder zickzackförmigen Verlauf mit einer zweiten Nulllinie und von der zweiten Nulllinie gemessener Amplitude (p) bilden, wobei längs der zweiten Nulllinie von radial außen nach radial innen die Amplitude (p) ausgehend von einer maximalen Amplitude mit einem Maß (pₘₐₓ) bis zu einer minimalen Amplitude mit einem Maß (pₘᵢₙ) stetig abnimmt.

Durch diese Ausbildung mit mindestens einem Feineinschnitt, welcher sich mit einer ersten Haupterstreckungsrichtung in der Reifenperipherie und mit einer zweiten Haupterstreckungsrichtung von der Reifenperipherie mit einer radialen Richtungskomponente nach radial innen erstreckt und welcher Einschnittswände mit korrespondierender Form aufweist, die längs eines radialen Erstreckungsabschnittes t₁ ausgehend von der Reifenperipherie nach radial innen in allen parallelen Schnittebenen zur Reifenperipherie mit einer längs der ersten Hauptersteckungsrichtung ausgebildeten Wellenlinien- oder Zickzackform mit einer ersten Nulllinie und von der ersten Nulllinie gemessener Amplitude (s) ausgebildet ist, wobei die Amplitude (s) der Wellenlinien- oder Zickzackform in den Schnittebenen ausgehend von einem Maß (sₘᵢₙ) einer minimalen Amplitude in der Reifenperipherie nach radial innen hin bis zu einem Maß (sₘₐₓ) einer maximalen Amplitude stetig zunimmt, wird eine über die Lebensdauer hinweg zunehmend wirkende Griffkantenlänge des Feineinschnittes zur Übertragung von Umfangs- und Seitenkräften ermöglicht und dabei, da die der ersten Nulllinien dieser parallelen Schnittebenen zur Reifenperipherie ihrerseits in allen Schnittebenen senkrecht zur ersten Haupterstreckungsrichtung des Feineinschnitts längs des radialen Erstreckungsabschnittes t₁ ausgehend von der Reifenperipherie nach radial innen ebenfalls einen wellenlinien- oder zickzackförmigen Verlauf mit einer zweiten Nulllinie und von der zweiten Nulllinie gemessener Amplitude (p) bilden, wobei längs der zweiten Nulllinie von radial außen nach radial innen die Amplitude (p) ausgehend von einer maximalen Amplitude mit einem Maß (pₘₐₓ) bis zu einer minimalen Amplitude mit einem Maß (pₘᵢₙ) stetig abnimmt, eine besonders hohe Versteifung des Profilblockelementes am Neureifen erzielt, die zusehends über die Lebensdauer abnimmt, wodurch eine gleichmäßigere Steifigkeit des Profilblockelementes über die Lebensdauer des Profilblockelementes erreicht wird. Somit wird eine über die Lebensdauer hinweg eine gleichbleibend hohe Griffeigenschaft auf Nässe, Schnee und Eis bei gleichmäßig hohen Bremseigenschaften auf Schnee, Eis und trockener Straße ermöglicht.

Besonders vorteilhaft ist die Ausbildung gemäß den Merkmalen von Anspruch 2, bei der die erste Haupterstreckungsrichtung ihre größte Richtungskomponente in axialer Richtung des Fahrzeugreifens aufweist. Dies ermöglicht eine optimierte Auslegung für Traktions- und Bremseigenschaften auf trockener und nasser Straßenoberfläche.

Besonders vorteilhaft ist die Ausbildung gemäß den Merkmalen von Anspruch 3, wobei die erste Haupterstreckungsrichtung parallel zur Schnittlinie wenigstens einer - insbesondere zweier einander gegenüberliegenden - das Profilelement begrenzenden Flanke(n) mit der Reifenperipherie ausgebildet ist. Die Versteifung ist bei einer derartigen Auslegung besonders wirkungsvoll.

Besonders vorteilhaft ist die Ausbildung gemäß den Merkmalen von Anspruch 4, wobei die zweite Haupterstreckungsrichtung einen Winkel α zur Radialen R des Fahrzeugreifens aufweist mit 0° ≤ α ≤ 20°. Durch die Größe des Winkels lässt sich eine zusätzliche Versteifung und eine günstigere Druckverteilung einstellen.

Besonders vorteilhaft ist die Ausbildung gemäß den Merkmalen von Anspruch 5 mit wenigstens zwei von einander axial beabstandeten Profilblockreihen mit jeweils durch Quer- oder Schrägrillen in Umfangsrichtung U des Fahrzeugluftreifens voneinander getrennten Profilblockelementen, in denen jeweils derartige Feineinschnitte ausgebildet sind, wobei die erste Haupterstreckungsrichtung der in den Profilblockelementen der ersten Profilblockreihe ausgebildeten Feineinschnitte einen Winkel β₁ zur axialen Richtung A des Fahrzeugreifens einschließt und die erste Haupterstreckungsrichtung der in den Profilblockelementen der zweiten Profilblockreihe ausgebildeten Feineinschnitte einen Winkel β₂ zur axialen Richtung A des Fahrzeugreifens einschließt, mit β₁ ≥ β₂.

Besonders vorteilhaft ist die Ausbildung gemäß den Merkmalen von Anspruch 6, wobei die erste Profilblockreihe eine im Bereich einer Reifenschulter ausgebildete Schulterprofilblockreihe und die zweite Profilblockreihe eine zwischen den Reifenschultern ausgebildete Profilblockreihe ist, wobei die erste Haupterstreckungsrichtung der in den Profilblockelementen der ersten Profilblockreihe ausgebildeten Feineinschnitte einen Winkel β₁ zur axialen Richtung A des Fahrzeugreifens einschließt und die erste Haupterstreckungsrichtung der in den Profilblockelementen der zweiten Profilblockreihe ausgebildeten Feineinschnitte einen Winkel β₂ zur axialen Richtung A des Fahrzeugreifens einschließt, mit β₁ > β₂. Hierdurch können die für die Seitenkraftübernagung wesentlichen Schulterblockreihen für diese Kraftübertragung optimiert und gleichzeitig die für Traktion und Bremsen wesentlichen zwischen den Schultern liegenden Profilblockreihen für diese Kraftübertragungen optimiert ausgebildet werden. Das Niveau des Reifens hinsichtlich Seitenkraft-, Traktionskraft- und Bremskraftübertragung kann hierdurch angehoben werden.

Die Erfindung ist im Folgenden an Hand der in den Fig. 1 bis 12 dargestellten Ausführungsbeispiele näher erläutert. Hierin zeigen
- Fig. 1: Umfangsabschnitt eines Laufstreifenprofils eines Fahrzeugluftreifens im Neuzustand des Fahrzeugluftreifens in Draufsicht,
- Fig. 2: Perspektivische Darstellung eines Profilblockelementes gemäß Schnitt II-II von Fig.1, bei dem der Schnitt entlang eines Feineinschnittes vorgenommen ist,
- Fig. 3: Laufstreifenprofil des Fahrzeugluftreifens von Fig. 1 in Draufsicht mit ungefähr zur Hälfte abgefahrener Profiltiefe entsprechend dem Schnitt III-III von Fig.2,
- Fig. 4: Profilblockelement von Fig.2 in Schnittdarstellung gemäß Schnitt IV-IV von Fig.2,
- Fig. 5a: Profilblockelement von Fig.2 und Fig.4 in Draufsicht gemäß Schnitt Va-Va von Fig. 4,
- Fig. 5b: Profilblockelement von Fig.2 und Fig.4 in Draufsicht den Reifen bei 50%-igem Abrieb, welche dem Schnitt Vb-Vb von Fig.4 entspricht,
- Fig. 5c: Profilblockelement von Fig.2 und Fig.4 in Draufsicht den Reifen bei annähernd 100%-igem Abrieb, welche dem Schnitt Vc-Vc von Fig.4 entspricht,
- Fig. 6: Profilblockelement von Fig.2 und Fig.4 in perspektivischer Darstellung mit dargestellter Projektion in axialer Richtung A,
- Fig. 7: Alternative Ausführung des Profilblockelementes von Fig.2 und Fig.4 ebenfalls in perspektivischer Darstellung entsprechend der Darstellung von Fig. 6 mit dargestellter Projektion in axialer Richtung A,
- Fig. 8a: Alternative Ausführung des Profilblockelementes von Fig. 2 und Fig. 4 mit alternativer Zahl der Wellenberge längs der axialen Erstreckung A,
- Fig. 8b: Darstellung eines Lamellenblechs zur Herstellung eines in Fig. 8a dargestellten Feineinschnittes,
- Fig. 9a: Darstellung des Profilblockelementes von Fig. 2 und Fig. 4 in Draufsicht im Zustand des Neuzustandes gemäß Fig. 5a
- Fig. 9b: Schnittdarstellung des Profilblockelementes von Fig. 2 und Fig. 4 im Schnitt senkrecht zur axialen Richtung A des Fahrzeugluftreifens im Zustand des Neuzustandes gemäß Fig. 5a,
- Fig. 10a:: Profilblockelement entsprechend der Darstellung von Fig. 9a, bei dem das Profilblockelement ein Profilblockelement mit 50 % abgeriebenem Abriebprofil ist, entsprechend der Darstellung von Fig. 5b,
- Fig. 10b:: Profilblockelement entsprechend der Darstellung von Fig. 9b am Zustand des Fahrzeugluftreifens mit 50 % abgeriebenem Laufstreifenprofil, wie in Fig. 5b dargestellt,
- Fig. 11a:: Profilblockelementes entsprechend der Darstellung von Fig. 9a, bei dem das Profilblockelement ein Profilblockelement mit annähernd 100 % abgeriebenem Abriebprofil ist, entsprechend der Darstellung von Fig. 5c,
- Fig. 11b:: Profilblockelement entsprechend der Darstellung von Fig. 9b am Zustand des Fahrzeugluftreifens mit anähernd 100 % abgeriebenem Laufstreifenprofil, wie in Fig. 5c dargestellt,

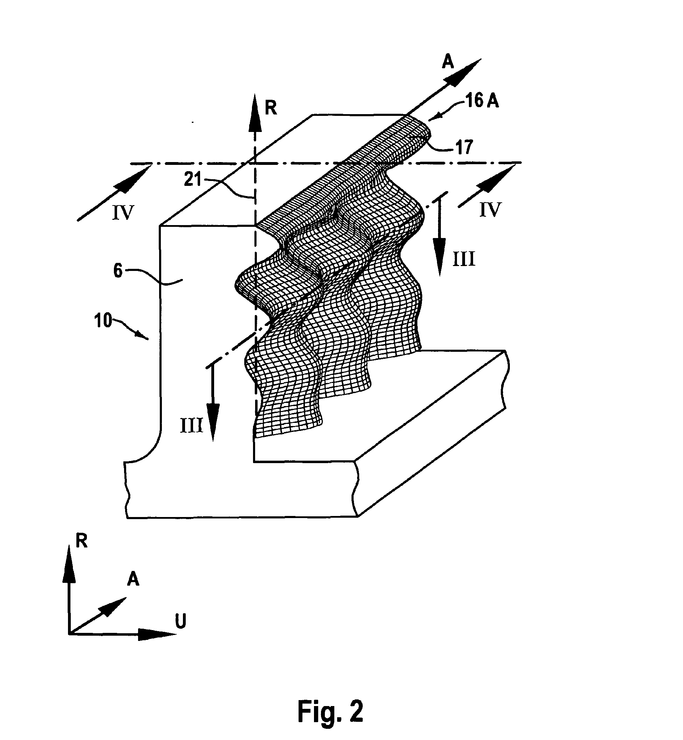

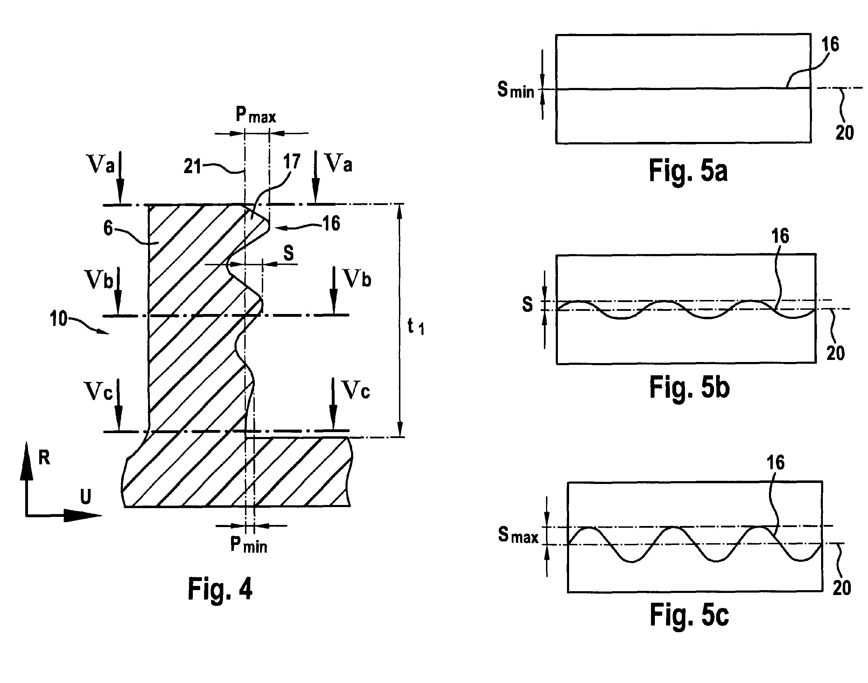

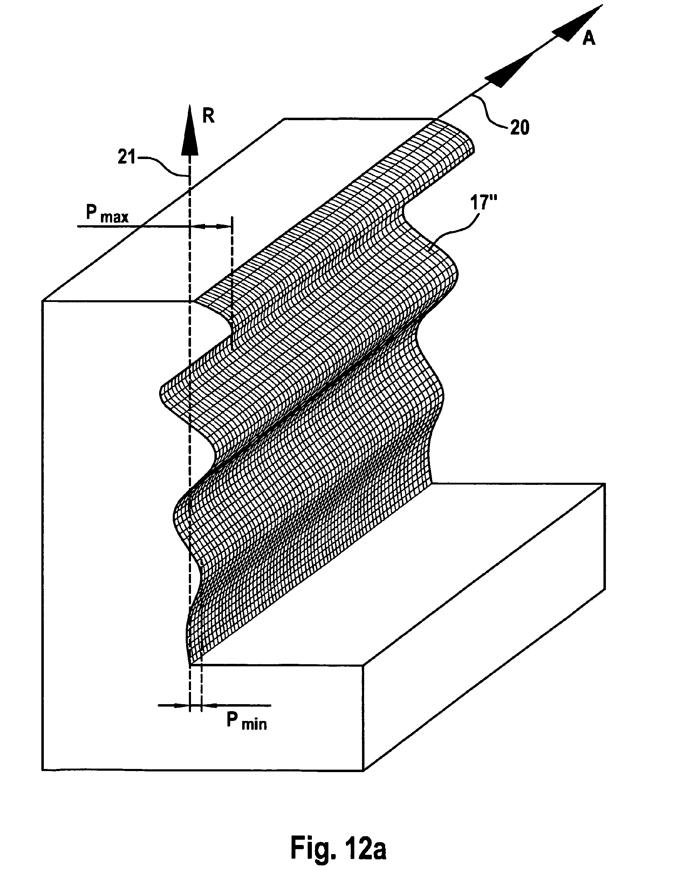

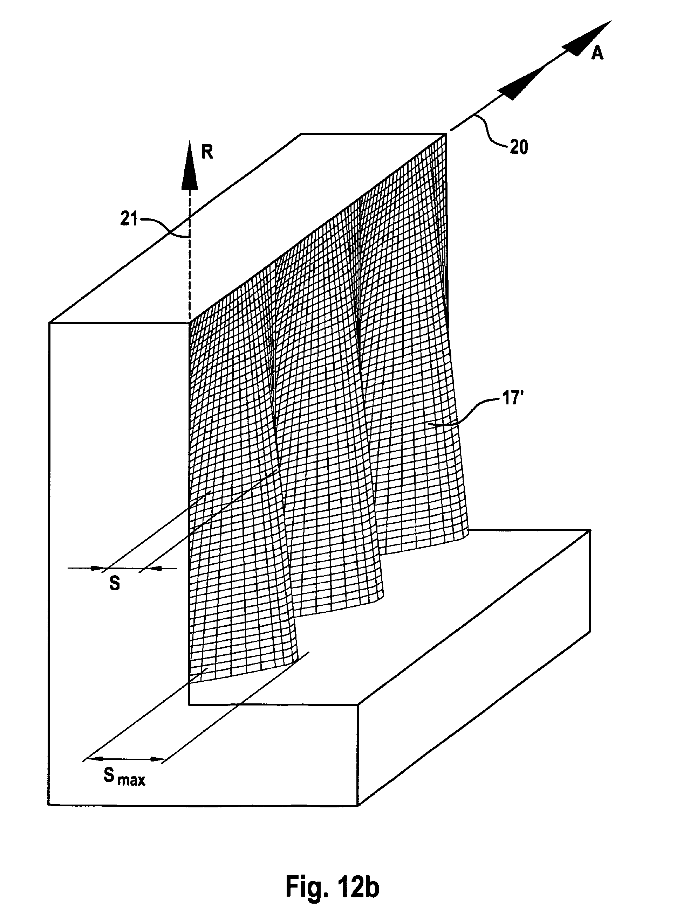

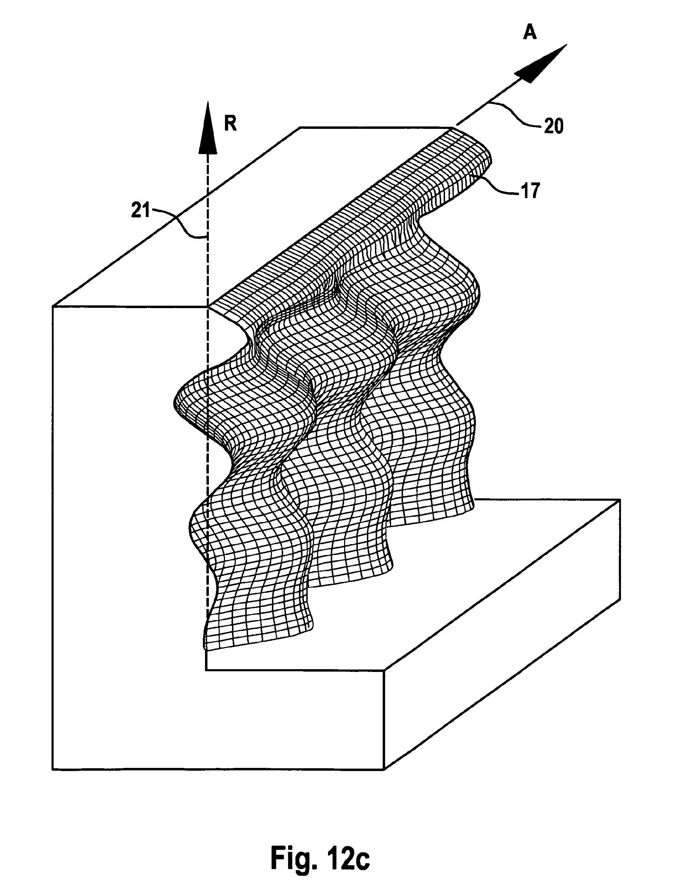

- Fig. 12a, Fig.12b und Fig.12b:: Schematische Darstellung zur Erläuterung des Konturenverlaufs des Feineinschnittes des Profilblockelementes von Fig. 2 durch Superposition zweier sich überlagernder Konturenverläufe, wobei die Fig. 12b den Amplitudenverlauf längs der axialen Erstreckung A über die Radiale R angibt, wobei Fig. 12a den Kurvenverlauf angibt, den die Nulllinie des Wellenverlaufes von Fig.12b längs der radialen Erstreckung R einnimmt, darstellt und wobei Fig.12c den durch Superposition der beiden wellenlinienförmigen Verläufe von Fig. 12a und Fig.12b erhaltenen Konturverlauf darstellt, den der Feineinschnitt von Fig. 2 und Fig. 4 über die axiale und die radiale Erstreckung einnimmt.

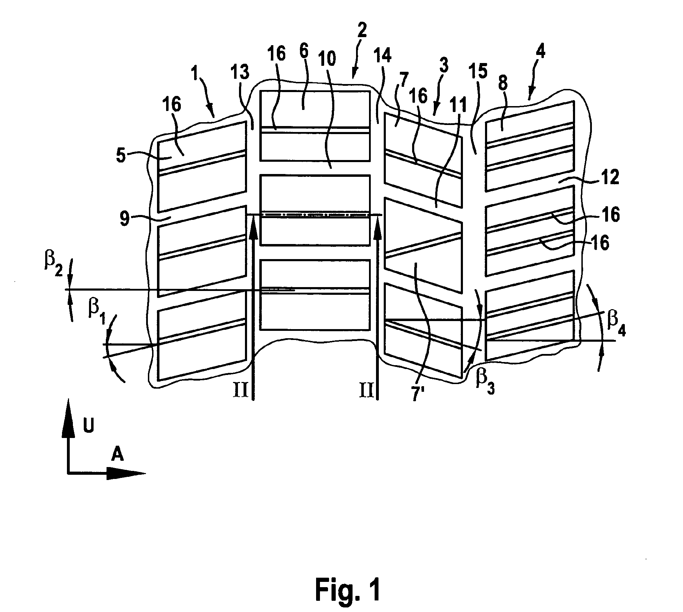

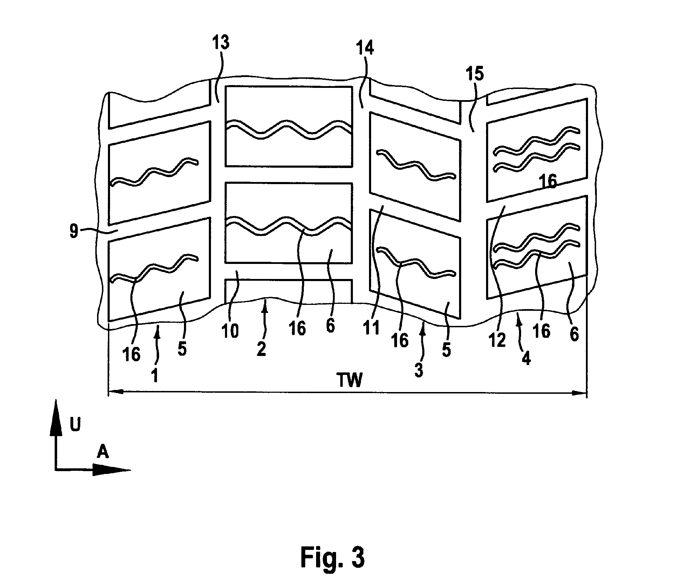

Fig.1 und Fig.3 zeigen das Laufstreifenprofil eines Fahrzeugluftreifens, wobei Fig.1 das Laufstreifenprofil im Neuzustand und Fig. 3 das Laufstreifenprofil bei zu 50% abgeriebener Profiltiefe darstellt. Das Laufstreifenprofil ist in den Darstellungen in der linken Reifenschulter mit einer in Umfangsrichtung U des Fahrzeugluftreifens über den gesamten Umfang erstreckten Schulterprofilblockreihe 1, bestehend aus in Umfangsrichtung U hintereinander angeordneten und jeweils durch eine Querrille 9 von einander getrennten Profilblockelementen 5 ausgebildet. In bekannter Weise ist von der linken Schulterprofilblockreihe 1 durch eine über den Umfang des Fahrzeugluftreifens in Umfangsrichtung U erstreckte Umfangsrille 13 in axialer Richtung A getrennte Profilblockreihe 2 ausgebildet mit in Umfangsrichtung U des Fahrzeugluftreifens hintereinander angeordneten, jeweils durch Querrillen 10 voneinander getrennten Profilblockelementen 6. Von der Profilblockreihe 2 ist in bekannter Weise durch eine über den Umfang des Fahrzeugluftreifens erstreckte, in Umfangsrichtung U ausgerichtete Umfangsrille 14 axial getrennte Profilblockreihe 3 ausgebildet, die in Umfangsrichtung U ausgerichtet und über den gesamten Umfang erstreckt aus in Umfangsrichtung U verteilt hintereinander angeordneten und jeweils durch Querrillen 11 voneinander getrennten Profilblockelementen 7 ausgebildet ist. Von der Profilblockreihe 3 ist in axialer Richtung A durch eine in Umfangsrichtung U ausgerichtete und über den gesamten Umfang erstreckte Umfangsrille 15 voneinander getrennt eine Schulterprofilblockreihe 4 bekannter Art ausgebildet, die über den gesamten Umfang des Fahrzeugluftreifens in Umfangsrichtung U ausgerichtet und aus in Umfangsrichtung U hintereinander verteilt angeordneten jeweils durch Querrillen 12 voneinander getrennten Profilblockelementen 8 ausgebildet ist.

In den Profilblockelementen 5,6,7 und 8 sind jeweils ein oder mehrere innerhalb des Profilblockelementes 5,6,7 bzw. 8 parallel zueinander angeordnete Feineinschnitte 16 ausgebildet, die innerhalb der Reifenaufstandsbreite TW in axialer Richtung A durch das gesamte jeweilige Profilblockelement hindurch erstreckt ausgebildet sind.

Im Folgenden wird die Ausbildung eines Feineinschnittes 16 anhand eines Profilblockelementes 6 der Profilblockreihe 2 beispielhaft erläutert. Zur Verdeutlichung ist in den Figuren die Tiefenerstreckung der Feineinschnitt deutlich vergrößert dargestellt.

Der Feineinschnitt 16 erstreckt sich im dargestellten Profilblockelement 6 in jeder senkrecht zur radialen Richtung R, d.h. parallel zur Reifenperipherie ausgebildeten Schnittebene mit einer ersten Haupterstreckungsrichtung in axialer Richtung A und mit einer zweiten Haupterstreckungsrichtung in radialer Richtung R des Fahrzeugluftreifens und ist mit zwei korrespondierenden Feineinschnittswänden 17 ausgebildet.

Der Feineinschnitt 16 erstreckt sich dabei im Neuzustand des Reifens über eine in radialer Richtung gemessene Erstreckung t₁, wobei für t₁ gilt: 3mm ≤ t₁ ≤ 25mm.

Die Feineinschnittswände 17 und somit der Feineinschnitt 16 sind mit einer dreidimensionalen Wellenform ausgebildet, die beispielsweise in Fig. 2 und Fig.12c dargestellt ist. Zur Verdeutlichung der dreidimensionalen Struktur ist in diesen perspektivischen Darstellungen, in denen die eine Feineinschnittswand 17 mit ihrem Verlauf dargestellt ist, die Feineinschnittswand 17 mit einer Liniengitterdarstellung wiedergegeben, die es ermöglicht, den dreidimensionalen wellenlinienförmigen Verlauf besser zu erkennen und zu verstehen.

In Fig.12a, Fig.12b und Fig.12c ist dargestellt, wie dieser dreidimensionale wellenlinienförmige Verlauf der Feineinschnittswand 17 und somit des Feineinschnitts 16 ausgebildet ist. Die Figuren 12a und 12b geben dabei zwei verschiedene dreidimensionale wellenlinienförmige Verläufe 17' und 17" der Feineinschnittwand wieder, aus denen der in Fig.12c dargestellte dreidimensionale wellenlinienförmige Verlauf der Feineinschnittswand 17 und des Feineinschnittes 16 durch Superposition erzeugt ist.

Der wellenlinienförmige Verlauf 17' von Figur 12b ist ein Feineinschnittverlauf, bei dem im Neuzustand des Reifens in der radial äußeren Reifenperipherie der Feineinschnitt eine geradlinige Ausbildung in Richtung der Reifenachse A einnimmt. Längs der Erstreckung in radialer Richtung von radial außen nach radial innen ist in allen parallel zur Reifenperipherie im Neuzustand gebildeten Ebenen der Feineinschnitt jeweils mit einer Wellenlinienform ausgebildet, wobei die Wellenlinie jeweils mit einer Nulllinie 20, die die Nulldurchgangslinie dieser Wellenlinienform darstellt. In der Reifenperipherie im Neuzustand entspricht die Nulllinie der axialen Richtung A. In den zur Reifenperipherie im Neuzustand parallelen Ebenen ist die Nulllinie 20 jeweils parallel zur axialen Richtung A ausgebildet. In Figur 12b ist deutlich zu erkennen, dass die Amplituden s der Wellenlinien in den einzelnen parallel zur Reifenperipherie im Neuzustand Querschnittsebenen von radial außen nach radial innen hin kontinuierlich zunehmen. Somit ist in der radial äußeren Reifenperipherie im Neuzustand die Amplitude mit dem minimalen Wert sₘᵢₙ im dargestellten Beispiel gleich Null und im radial inneren Endbereich des Feineinschnitts ist sie mit dem maximalen Wert sₘₐₓ am größten.

Fig. 12a zeigt einen Verlauf 17" der Nulllinien 20 von Fig. 12b längs der radialen Erstreckung von radial außen nach radial innen im Feineinschnitt. Dabei wird deutlich, dass die Schnittkontur der Nulllinien 20 der Fig. 12b in allen Schnittebenen senkrecht zu den Nulllinien 20 - d. h. im dargestellten Beispiel in allen Schnittebenen senkrecht zur Reifenachse - ihrerseits längs der radialer Erstreckung des Feineinschnitts einen wellenlinienförmigen Verlauf um eine zweite Nulllinie 21 aufweist, die sich in radialer Richtung R des Fahrzeugluftreifens erstreckt. Die Nulllinie stellt die Nulldurchgangslinie dieser Wellenlinienform dar. In Figur 12a ist deutlich zu erkennen, dass dieser wellenlinienförmige Schnittkonturverlauf der Nulllinien 20 längs der radialen Erstreckung der Wellenlinienform von radial außen nach radial innen um die zweite Nulllinie 21 unter kontinuierlich abnehmender Amplitude p ausgehend von einer maximalen Amplitude pₘₐₓ in der der Reifenperipherie im Neuzustand des Reifens nächstgelegenen Scheitelpunkt bis zu einer minimalen Amplitude pₘᵢₙ im radial inneren Endbereich des Feineinschnitts kontinuierlich reduziert wird.

Fig.12c zeigt den durch Superposition, d.h. durch Überlagerung der in Fig.12b und Fig.12a dargestellten wellenlinienförmigen Verläufe 17' und 17" erhaltenen Verlauf der Feineinschnittswand 17 bzw. des Feineinschnitts 16, der auch in Figur 2 dargestellt ist.

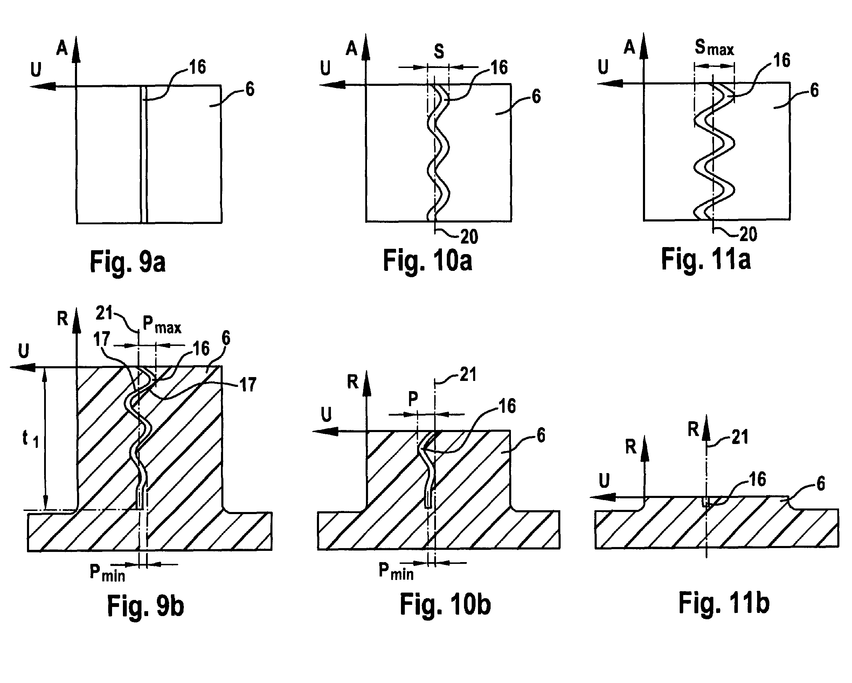

Die Figuren 2, 3, 4, 5a, 5b, 5c, 9a, 9b, 10a, 10b, 11a und 11b zeigen in unterschiedlichsten Darstellungen den hierdurch erzielten Verlauf Aus Fig.5a, Fig.5b, Fig.5c sowie aus Fig.3, Fig.9a und Fig.9b, Fig.10 a und Fig10b, Fig.11a, und Fig.11b ist dabei erkennbar, dass der Reifen im Neuzustand im Profilblockelement 6 einen Feineinschnitt 16 mit korrespondierenden Feineinschnittswänden 17 aufweist, der in der Reifenperipherie geradlinig ausgebildet ist. In Fig.1, Fig.2, Fig.4 und Fig.5a, und in Fig.9a und Fig.9b ist deutlich zu erkennen, dass der Feineinschnitt 16 mit seinen Feineinschnittswänden 17 mit zunehmender Lebensdauer des Reifens bei der durch Abrieb bedingten abnehmender Profiltiefe in der Reifenperipherie jeweils einer Wellenlinienform mit Nulllinie 20 und einer Amplitude s aufweist, wobei die Amplitude s der über die Lebensdauer in der Reifenperipherie jeweils gebildeten Wellenform zunimmt. Den maximalen Wert sₘₐₓ erreicht die Amplitude im Lebenszustand bei zu annähernd 100% abgeriebenem Profilblockelement, der in Fig.5c, Fig.11a und Fig.11b dargestellt ist.

In den Figuren 9b, 10b und 11b ist deutlich zu erkennen, dass der wellenförmige Schnittkonturverlauf der Nulllinien 20 um die Nulllinie 21 längs der radialen Erstreckung R nach radial innen mit abnehmender Amplitude p bei dem Profilblockelement 6 eine mit zunehmendem Abrieb abnehmende zusätzliche Stützwirkung bewirkt. Bei dem Profilblockelement 6 im Neuzustand des Reifens, der in Fig. 9b dargestellt ist, wird durch die im radial äußeren Erstreckungsbereich ausgebildete große Amplitude pₘₐₓ bei Belastungen in Umfangsrichtung U des Reifens ein starker sich gegenseitig stützender Kontakt der beiden Feinschnittswände 17 zueinander und somit eine starke Stützwirkung der beiden den Feineinschnitt 16 aufgetrennten Teile des Profilblockelementes 6 bewirkt. Diese Stützwirkung ist bei dem in Figur 10b dargestellten Profilblockelement 6, das das Profilblockelement 6 nach 50%-igem Abrieb zeigt, aufgrund der nun deutlich reduzierten im radial äußeren Erstreckungsbereich noch vorhandenen Amplitude p bereits deutlich reduziert. Bei dem in Figur 11b dargestellten Profilblockelement 6, das das Profilblockelement nach annähernd 100%-igem Abrieb zeigt, ist aufgrund der nun im radial äußeren Erstreckungsbereich nicht einmal mehr vorhandenen minimalen Amplitude pₘᵢₙ auch die Stützwirkung auf ein Minimum reduziert. Aus diesen Figuren wird deutlich, dass die Profilblockelemente trotz des Feineinschnittes 16 im Neuzustand eine große zusätzliche Versteifung aufweist, die der Aufweichung durch den Feineinschnitt entgegenwirkt, und dass diese zusätzliche Versteifung mit zunehmender Lebensdauer bzw. zunehmendem Abrieb, in der die aufweichende Wirkung eines Feineinschnittes abnimmt, ebenfalls reduziert wird.

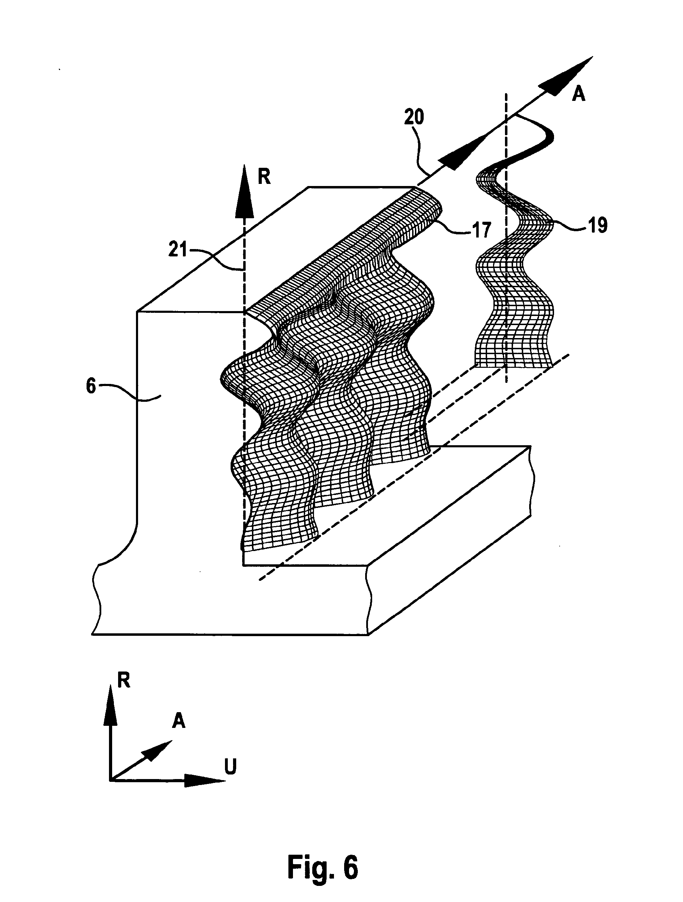

Figur 6 zeigt die Ausbildung eines derartigen Feineinschnittes 16 bzw. dessen Feineinschnittswand 17 in Projektion längs der Nulllinie 20, die in diesem dargestellten Beispiel der axialen Richtung A entspricht. Dabei ist zu erkennen, dass die Projektion 19 die Form der Projektion eines Tornados einnimmt.

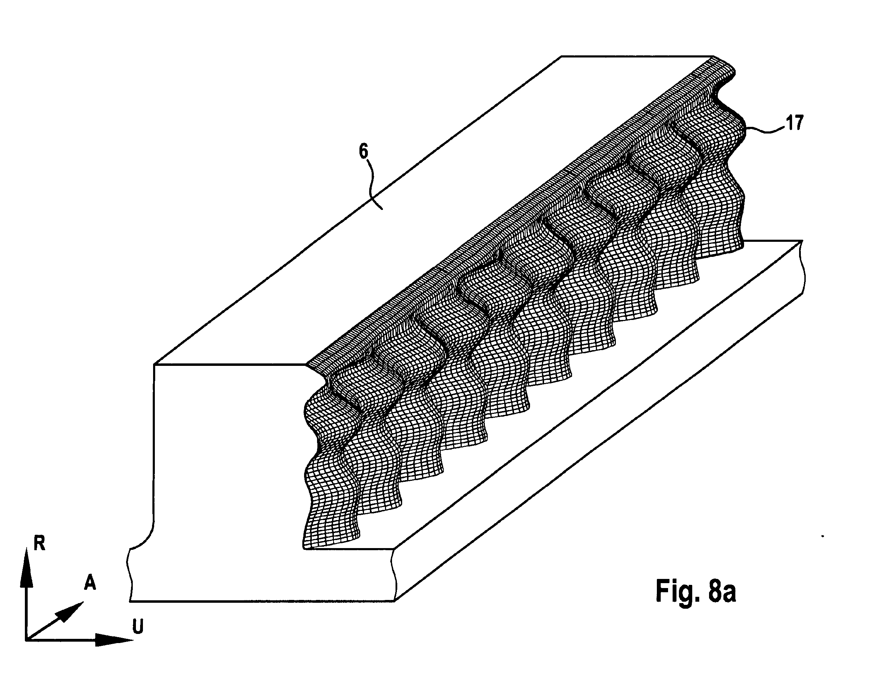

In den oben genannten Figuren ist jeweils ein Feineinschnitt 16 mit Feineinschnittswänden 17 dargestellt, der längs der Erstreckung der Nulllinien 20 in der zur Reifenperipherie parallelen Querschnittsebene jeweils nur wenige - in den beispielhaften Darstellungen jeweils drei - Rillenberge aufweist. In Fig.8a ist ein alternatives Ausführungsbeispiel mit deutlich mehr, nämlich mit zehn Rillenbergen dargestellt.

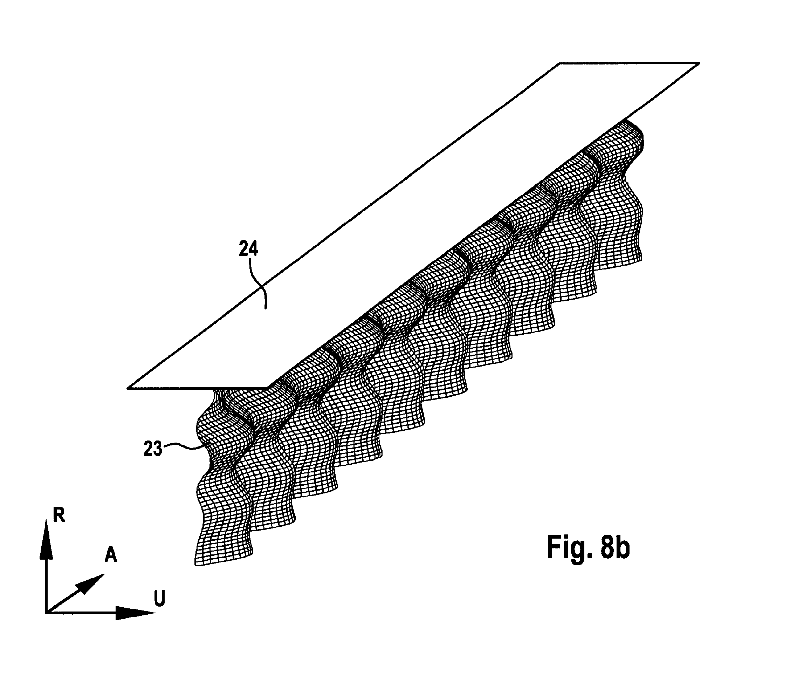

In Fig. 8b ist beispielhaft am Beispiel der in Fig. 8a dargestellten Ausführung des Feineinschnittes 16 mit Feineinschnittswand 17 ein Lamellenblech 23 dargestellt, das zur Erzeugung derartige Feineinschnitte eingesetzt wird. Das Lamellenblech 23 ist in bekannter Weise an einer Halteleiste 24 befestigt, die in der nicht dargestellten Vulkanisationsform bekannter Art zur Erzeugung des Reifenprofils befestigt ist. Das Lamellenblech 23 ist mit einer dreidimensionalen den Feineinschnittswänden 17 korrespondierenden Wellenform ausgeformt.

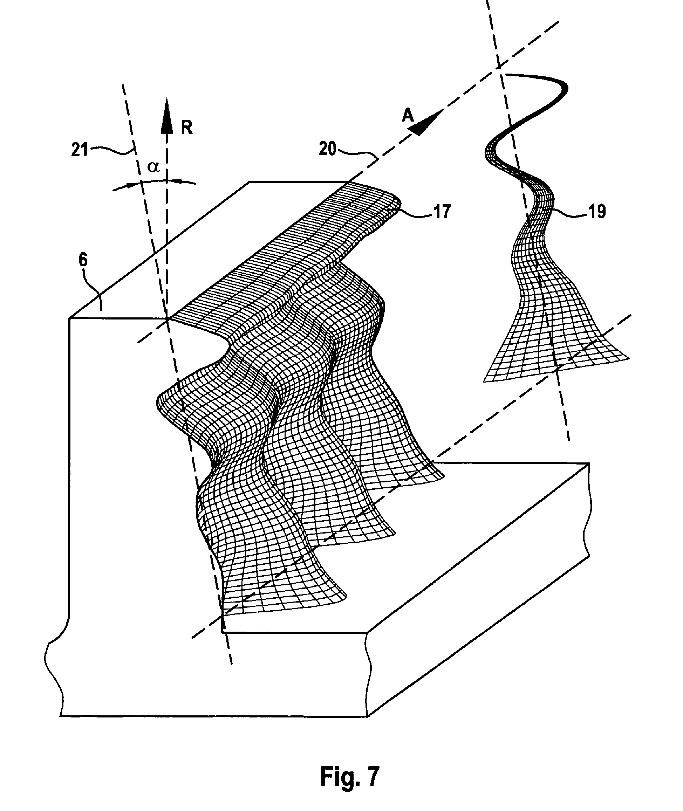

In oben genannten Figuren ist jeweils ein Feinschnitt 16 beispielhaft dargestellt, deren zweite Nulllinie 21 in radialer Richtung R erstreckt ausgebildet ist. Entsprechend der Darstellung von Fig. 6 ist in Fig. 7 eine alternative Ausbildung eines Feineinschnittes 16 mit Feineinschnittswänden 17 dargestellt, bei der die zweite Nulllinie 21, unter einem Neigungswinkel α zur Radialen R ausgebildet ist. Der Winkel α ist dabei mit α ≤ 20° ausgebildet. Beispielsweise ist 3° ≤ α ≤ 10°. Im dargestellten Beispiel ist der Winkel α mit α = 3° gewählt.

Wie in Fig.1 und Fig. 3 dargestellt ist, sind die Nulllinien 20 der Feineinschnitte 16 in den Profilblockelementen 5,6,7 und 8 in einer Ausführung jeweils mit einem Neigungswinkel β₁,β₂,β₃ bzw. β₄ zur axialen Richtung A ausgebildet mit β₁≤45°,β₂≤45°,β₃≤45° und β₄≤45°. In der konkret dargestellten Ausführung sind die Neigungswinkel mit β₁≤30°,β₂≤30°,β₃≤30° und β₄≤30° ausgebildet. Wie dargestellt, sind die Winkel β₁, β₂, β₃ bzw. β₄ in einer Ausführung zumindest zum Teil unterschiedlich groß gewählt. Im dargestellten Ausführungsbeispiel ist β₁=5°, β₂=0°, β₃=5° und β₄=5°, wobei β₃ einerseits und β₁ und β₂ andererseits eine zueinander entgegengesetzt Neigungsrichtung beschreiben.

Die mit wenigstens zwei von einander axial beabstandeten Profilblockreihen mit jeweils durch Quer- oder Schrägrillen in Umfangsrichtung U des Fahrzeugluftreifens voneinander getrennten Profilblockelementen, in denen jeweils derartige Feineinschnitte ausgebildet sind, wobei die erste Haupterstreckungsrichtung der in den Profilblockelementen der ersten Profilblockreihe ausgebildeten Feineinschnitte einen Winkel β₁ zur axialen Richtung A des Fahrzeugreifens einschließt und die erste Haupterstreckungsrichtung der in den Profilblockelementen der zweiten Profilblockreihe ausgebildeten Feineinschnitte einen Winkel β₂ zur axialen Richtung A des Fahrzeugreifens einschließt, mit β₁ ≥ β₂.

Wie in den Figuren 1 und 3 dargestellt ist, sind die Nulllinien 20 der Feineinschnitte 16 in den Profilblockelementen 5,6,7 und 8 in einer Ausführung jeweils parallel zu den die Profilblockelemente 5 der Schulterprofilblockreihel bzw. zu den die Profilblockelemente 6 der Profilblockreihe 2 bzw. zu den die Profilblockelemente 7 der Profilblockreihe 3 bzw. zu den die Profilblockelemente 8 der Schulterprofilblockreihe 4 jeweils trennenden Querrillen 9 bzw. 10 bzw. 11 bzw. 12 und dem jeweiligen Rillengrundverlauf ausgeführt.

In einer nicht dargestellten Ausführung sind die Nulllinien 20 der Feineinschnitte 16 in den Profilblockclcmcnten 5,6,7 und 8 jeweils parallel zu den die Profilblockelemente 5 der Schulterprofilblockreihel bzw. zu den die Profilblockelemente 6 der Profilblockreihe 2 bzw. zu den die Profilblockelemente 7 der Profilblockreihe 3 bzw. zu den die Profilblockelemente 8 der Schulterprofilblockreihe 4 jeweils begrenzenden Rillenflanken der Querrillen 9 bzw. 10 bzw. 11 bzw. 12 ausgeführt.

An einem Profilblockelement 7' der Profilblockreihe 3 ist in Fig. 1 eine alternative Ausrichtung der Nulllinie 20 des Feineinschnittes 16 dargestellt, die diagonal zum Profilelement 11 des Profilblockelementes 3 verläuft.

### Bezugszeichenliste

### (Teil der Beschreibung)

- 1: Schulterblockreihe
- 2: Profilblockreihe
- 3: Profilblockreihe
- 4: Schulterblockreihe
- 5: Profilblockelement
- 6: Profilblockelement
- 7: Profilblockelement
- 8: Profilblockelement
- 9: Querrille
- 10: Querrille
- 11: Querrille
- 12: Querrille
- 13: Umfangsrille
- 14: Umfangsrille
- 15: Umfangsrille
- 16: Feineinschnitt
- 17: Feineinschnittswand
- 18:
- 19: Projektion
- 20: Nulldurchgangslinie
- 21: Nulldurchgangslinie
- 22:
- 23: Lamellenblech
- 24: Halterung

## Patentansprüche

1. Fahrzeugreifen - insbesondere Fahrzeugluftreifen - mit einem Laufstreifen, welcher sich aus Profilelementen (5,6,7,8), wie Profilblöcken oder Profilrippen, zusammensetzt, von denen wenigstens einige jeweils mit mindestens einem Feineinschnitt (16) versehen sind, welcher sich mit einer ersten Haupterstreckungsrichtung in der Reifenperipherie und mit einer zweiten Haupterstreckungsrichtung von der Reifenperipherie mit einer radialen Richtungskomponente nach radial innen erstreckt und welcher Einschnittswände (17) mit korrespondierender Form aufweist, die längs eines radialen Erstreckungsabschnittes t₁ ausgehend von der Reifenperipherie nach radial innen in allen parallelen Schnittebenen zur Reifenperipherie mit einer längs der ersten Hauptersteckungsrichtung ausgebildeten Wellenlinien- oder Zickzackform mit einer ersten Nulllinie (20) und von der ersten Nulllinie gemessener Amplitude (s) ausgebildet ist, **gekennzeichnet dadurch, dass** die Amplitude (s) der Welleinien- oder Zickzackform in den Schnittebenen ausgehend von einem Maß (sₘᵢₙ) einer minimalen Amplitude in der Reifenperipherie nach radial innen hin bis zu einem Maß (sₘₐₓ) einer maximalen Amplitude stetig zunimmt, und dass
die ersten Nulllinien (20) dieser parallelen Schnittebenen zur Reifenperipherie ihrerseits in allen Schnittebenen senkrecht zur ersten Haupterstreckungsrichtung des Feineinschnitts (16) längs des radialen Erstreckungsabschnittes t₁ ausgehend von der Reifenperipherie nach radial innen ebenfalls einen wellenlinien- oder zickzackförmigen Verlauf mit einer zweiten Nulllinie (21) und von der zweiten Nulllinie (21) gemessener Amplitude (p) bilden, wobei längs der zweiten Nulllinie (21) von radial außen nach radial innen die Amplitude (p) ausgehend von einer maximalen Amplitude mit einem Maß (pₘₐₓ) bis zu einer minimalen Amplitude mit einem Maß (pₘᵢₙ) stetig abnimmt.

2. Fahrzeugreifen gemäß den Merkmalen von Anspruch 1,
bei der die erste Haupterstreckungsrichtung ihre größte Richtungskomponente in axialer Richtung A des Fahrzeugreifens aufweist.

3. Fahrzeugreifen gemäß den Merkmalen von einem oder mehreren der vorangegangenen Ansprüche,
wobei die erste Haupterstreckungsrichtung parallel zur Schnittlinie wenigstens einer - insbesondere zweier einander gegenüberliegenden - das Profilelement begrenzenden Flanke(n) mit der Reifenperipherie ausgebildet ist.

4. Fahrzeugreifen gemäß den Merkmalen von einem oder mehreren der vorangegangenen Ansprüche,
wobei die zweite Haupterstreckungsrichtung (21) einen Winkel α zur Radialen R des Fahrzeugreifens aufweist mit 0° ≤ α ≤ 20°.

5. Fahrzeugreifen gemäß den Merkmalen von einem oder mehreren der vorangegangenen Ansprüche,
mit wenigstens zwei von einander axial beabstandeten Profilblockreihen (1,2) mit jeweils durch Quer- oder Schrägrillen in Umfangsrichtung U des Fahrzeugluftreifens voneinander getrennten Profilblockelementen (5,6), in denen jeweils derartige Feineinschnitte (16) ausgebildet sind, wobei die erste Haupterstreckungsrichtung der in den Profilblockelementen (5) der ersten Profilblockreihe (1) ausgebildeten Feineinschnitte (16) einen Winkel β₁ zur axialen Richtung A des Fahrzeugreifens einschließt und die erste Haupterstreckungsrichtung der in den Profilblockelementen (6) der zweiten Profilblockreihe (2) ausgebildeten Feineinschnitte einen Winkel β₂ zur axialen Richtung A des Fahrzeugreifens einschließt, mit β₁ ≥ β₂.

6. Fahrzeugreifen gemäß den Merkmalen von Anspruch 5,
wobei die erste Profilblockreihe (1) eine im Bereich einer Reifenschulter ausgebildete Schulterprofilblockreihe und die zweite Profilblockreihe (2) eine zwischen den Reifenschultern ausgebildete Profilblockreihe ist, wobei die erste Haupterstreckungsrichtung der in den Profilblockelementen (5) der ersten Profilblockreihe (1) ausgebildeten Feineinschnitte (16) einen Winkel β₁ zur axialen Richtung A des Fahrzeugreifens einschließt und die erste Haupterstreckungsrichtung der in den Profilblockelementen (6) der zweiten Profilblockreihe (2) ausgebildeten Feineinschnitte einen Winkel β₂ zur axialen Richtung A des Fahrzeugreifens einschließt, mit β₁ > β₂.

## Claims

1. Vehicle tyre - in particular a pneumatic vehicle tyre - with a tread rubber, which is made up of profile elements (5, 6, 7, 8), such as profile blocks or profile ribs, at least some of which are respectively provided with at least one sipe (16), which extends with a first main direction of extent in the tyre periphery and with a second main direction of extent radially inwards from the tyre periphery with a radial directional component and which has sipe walls (17) of an appropriate form, which is formed along a portion of radial extent t₁, radially inwards from the tyre periphery, in all parallel sectional planes to the tyre periphery with a wavy or zigzag shape formed along the first main direction of extent with a first zero line (20) and amplitude (s), measured from the first zero line, **characterized in that** the amplitude (s) of the wavy or zigzag shape steadily increases, in the sectional planes, from an amount (sₘᵢₙ) of a minimum amplitude in the tyre periphery radially inwards to an amount (sₘₐₓ) of a maximum amplitude, and **in that** the first zero lines (20) of these parallel sectional planes to the tyre periphery for their part likewise form a wavy- or zigzag-shaped profile in all the sectional planes perpendicular to the first main direction of extent of the sipe (16) radially inwards along the portion of radial extent t₁, from the tyre periphery, with a second zero line (21) and amplitude (p), measured from the second zero line (21), the amplitude (p) steadily decreasing along the second zero line (21) from radially outside to radially inside, from a maximum amplitude with an amount (pₘₐₓ) to a minimum amplitude with an amount (pₘᵢₙ).

2. Vehicle tyre according to the features of Claim 1, in which the first main direction of extent has its greatest directional component in the axial direction A of the vehicle tyre.

3. Vehicle tyre according to the features of one or more of the preceding claims, the first main direction of extent being formed parallel to the sectional line of at least one - in particular two mutually opposite - flank(s), delimiting the profile element, with the tyre periphery.

4. Vehicle tyre according to the features of one or more of the preceding claims, the second main direction of extent (21) having an angle α in relation to the radial R of the vehicle tyre where 0° ≤ α ≤ 20°.

5. Vehicle tyre according to the features of one or more of the preceding claims, with at least two axially spaced-apart rows of profile blocks (1, 2) with in each case profile block elements (5, 6) separated from one another by transverse or oblique grooves in the circumferential direction U of the pneumatic vehicle tyre, in which elements such sipes (16) are respectively formed, the first main direction of extent of the sipes (16) that are formed in the profile block elements (5) of the first row of profile blocks (1) forming an angle β₁ in relation to the axial direction A of the vehicle tyre and the first main direction of extent of the sipes that are formed in the profile block elements (6) of the second row of profile blocks (2) forming an angle β₂ in relation to the axial direction A of the vehicle tyre, where β₁ ≥ β₂.

6. Vehicle tyre according to the features of Claim 5, the first row of profile blocks (1) being a row of shoulder profile blocks that is formed in the region of a tyre shoulder and the second row of profile blocks (2) being a row of profile blocks that is formed between the tyre shoulders, the first main direction of extent of the sipes (16) that are formed in the profile block elements (5) of the first row of profile blocks (1) forming an angle β₁ in relation to the axial direction A of the vehicle tyre and the first main direction of extent of the sipes that are formed in the profile block elements (6) of the second row of profile blocks (2) forming an angle β₂ in relation to the axial direction A of the vehicle tyre, where β₁ ≥ β₂.

## Revendications

1. Bandage pour roue de véhicule, en particulier bandage pneumatique pour roue de véhicule, doté d'une bande de roulement constituée d'éléments profilés (5, 6, 7, 8), par exemple des blocs profilés ou des nervures profilées, dont au moins certains sont dotés d'au moins une fine entaille (16) qui s'étend dans une première direction principale d'extension dans la périphérie du bandage de roue et dans une deuxième direction principale d'extension radialement vers l'intérieur depuis la périphérie du bandage de roue avec une composante radiale de direction et qui présente des parois (17) d'entaille de forme correspondante qui, sur une partie t₁ d'extension radiale partant de la périphérie de bandage de roue et orientée radialement vers l'intérieur présente dans tous les plans de coupe parallèles à la périphérie du bandage de roue la forme d'une ligne ondulée ou en zigzag dans la première direction principale d'extension, avec une première ligne nulle (20), et dont l'amplitude (s) est mesurée à partie de la première ligne nulle,
**caractérisé en ce que**
l'amplitude (s) de la forme de la ligne ondulée ou en zigzag augmente de manière monotone dans le plan de coupe, partant d'une valeur (sₘᵢₙ) d'une amplitude minimale à la périphérie du bandage de roue jusqu'à une valeur (sₘₐₓ) d'une amplitude maximale dans la direction allant radialement vers l'intérieur et
**en ce que** les premières lignes nulles (20) de ces plans de coupe parallèles à la périphérie du bandage forment pour leur part également dans tous les plans de coupe, perpendiculairement à la première direction d'extension principale de la fine entaille (16) dans la partie t₁ qui s'étend radialement, partant de la périphérie du bandage de roue et dans la direction allant radialement vers l'intérieur une évolution en ondulations ou en zigzag avec une deuxième ligne nulle (21) et une amplitude (p) mesurée depuis la deuxième ligne nulle (21), l'amplitude (p) diminuant de manière monotone le long de la deuxième ligne nulle (21) dans la direction allant radialement vers l'intérieur en partant d'une amplitude maximale d'une valeur (pₘₐₓ) à une amplitude minimale d'une valeur (pₘᵢₙ).

2. Bandage pour roue de véhicule selon les caractéristiques de la revendication 1, dans lequel la première direction d'extension principale présente sa plus grande composante de direction dans la direction axiale A du bandage pour roue de véhicule.

3. Bandage pour roue de véhicule selon les caractéristiques d'une ou plusieurs des revendications précédentes, dans lequel la direction d'extension principale présente parallèlement à la ligne de coupe au moins un et notamment deux flancs mutuellement opposés qui délimitent l'élément profilé avec la périphérie du bandage de roue.

4. Bandage pour roue de véhicule selon les caractéristiques d'une ou plusieurs des revendications précédentes, dans lequel la deuxième direction d'extension principale (21) forme par rapport à la radiale R du bandage de roue du véhicule un angle α, avec 0° ≤ α ≤ 20°.

5. Bandage pour roue de véhicule selon les caractéristiques d'une ou plusieurs des revendications précédentes, qui présente au moins deux rangées (1, 2) de blocs profilés situées à distance l'une de l'autre dans la direction axiale et qui présentent des éléments (5, 6) de blocs profilés séparés les uns des autres par des rainures transversales ou obliques dans la direction périphérique U du bandage pneumatique de roue
de véhicule et dans chacun desquels de fines entailles (16) sont formées, la première direction d'extension principale des fines entailles (16) formées dans les éléments (5) de blocs profilés de la première rangée (1) de blocs profilés formant un angle β₁ par rapport à la direction axiale A du bandage de roue de véhicule et la première direction d'extension principale des fines entailles formées dans les éléments (6) de blocs profilés de la deuxième rangées (2) de blocs profilés formant un angle β₂ par rapport à la direction axiale A du bandage pour roue de véhicule, avec β₁ ≥ β₂.

6. Bandage pour roue de véhicule selon les caractéristiques de la revendication 5, dans lequel la première rangée (1) de blocs profilés est une rangée de blocs profilés d'épaulement formée dans la partie qui forme un épaulement du bandage de roue et la deuxième rangée (2) de blocs profilés est une rangée de blocs profilés formée entre les épaulements du bandage de roue, la première direction d'extension principale des fines entailles (16) formées dans les éléments (5) de blocs profilés de la première rangée (1) de blocs profilés formant un angle β₁ par rapport à la direction axiale A du bandage de roue du véhicule, la première direction d'extension principale des fines entailles formées dans les éléments (6) de blocs profilés de la deuxième rangée (2) de blocs profilés formant un angle β₂ par rapport à la direction axiale A du bandage de roue du véhicule, avec β₁ > β₂.
